# EUROPÄISCHE PATENTSCHRIFT

(11) **EP 3 483 047 B1**
(45) Veröffentlichungstag und Bekanntmachung des Hinweises auf die Patenterteilung: **17.03.2021**
(21) Anmeldenummer: 18196740.7
(22) Anmeldetag: 26.09.2018
(51) Int. Cl.: B62D 33/04, B60P 7/15

(54) **HALTEEINRICHTUNG FÜR EIN NUTZFAHRZEUG, ANORDNUNG EINER RUNGE MIT EINER HALTEEINRICHTUNG, NUTZFAHRZEUG, VERFAHREN ZUR HERSTELLUNG EINER HALTEEINRICHTUNG UND VERFAHREN ZUR MONTAGE EINER HALTEEINRICHTUNG AN EINER RUNGE**
HOLDING DEVICE FOR A COMMERCIAL VEHICLE, ARRANGEMENT OF A STANCHION WITH A HOLDING DEVICE, COMMERCIAL VEHICLE, METHOD FOR PRODUCING A HOLDING DEVICE AND METHOD FOR MOUNTING A HOLDING DEVICE FOR LOCKING ON A STANCHION
DISPOSITIF DE RETENUE POUR UN VÉHICULE UTILITAIRE, AGENCEMENT D'UN RANCHER DOTÉ D'UN DISPOSITIF DE RETENUE, VÉHICULE UTILITAIRE, PROCÉDÉ DE FABRICATION D'UN DISPOSITIF DE RETENUE ET PROCÉDÉ DE MONTAGE D'UN DISPOSITIF DE RETENUE SUR UN RANCHER

(30) Priorität: 14.11.2017 DE 102017126687
(43) Veröffentlichungstag der Anmeldung: 15.05.2019
(73) Patentinhaber: Kögel Trailer GmbH, 89349 Burtenbach (DE)
(72) Erfinder: BROLL, Tobias, 86381 Krumbach-Billenhausen (DE); KALISCHKO, Thomas, 86470 Tannhausen (DE)
(74) Vertreter: Kilchert, Jochen

(56) Entgegenhaltungen:
- EP-A1- 2 184 221
- US-A- 3 858 988
- US-A- 5 020 948
- US-A- 5 284 311
- US-A1- 2005 035 340

## Beschreibung

Die Erfindung betrifft eine Halteeinrichtung für ein Nutzfahrzeug, eine Anordnung einer Halteeinrichtung mit einer Runge, ein Nutzfahrzeug, ein Verfahren zur Herstellung einer Halteeinrichtung und ein Verfahren zur Montage einer Halteeinrichtung an einer Runge. Eine Halteeinrichtung gemäß dem Oberbegriff des Patentanspruchs 1 ist beispielsweise aus EP 1 816 057 B1 bekannt.

Um Ladegut in einem Nutzfahrzeug, insbesondere in einem Sattelauflieger mit Planenaufbau, ordnungsgemäß zur Seite hin zu sichern, werden Ladungssicherungselemente in Halteeinrichtungen eingelegt bzw. eingesteckt. Als Ladungssicherungselemente werden vorwiegend Ladungssicherungslatten in Form von Einstecklatten eingesetzt. Die Halteeinrichtungen sind dabei an Rungen auf unterschiedlichen Höhen vom Ladeboden des Nutzfahrzeugs ausgehend montiert.

Die Montagehöhen der Halteeinrichtungen und somit der Ladungssicherungselemente sollten dabei entsprechend der Ladegutabmessungen an den Rungen montiert sein, um eine optimale Sicherung des Ladeguts zu erreichen.

Die aus der eingangs genannten EP 1 816 057 B1 bekannte Halteeinrichtung ist ein Bestandteil eines Rungensystems für Nutzfahrzeugaufbauten und wird in dieser als Planlattentasche bezeichnet. Die Runge ist durch einen länglichen Grundkörper gebildet, an den seitlich die Planlattentaschen positionierbar sind. Der Grundkörper der Runge und die Planlattentaschen sind dabei mit definierten Lochbildern versehen. Die Runge und die Planlattentaschen sind daher in unterschiedlichen Stellungen am Nutzfahrzeugaufbau in vorgebbaren Höhenschritten mittel- oder unmittelbar zueinander festlegbar. Die Planlattentaschen sind jeweils mit mindestens einem Langloch versehen. Des Weiteren sind die Planlattentaschen durch Nieten mit dem Grundkörper der Runge fest verbindbar.

Die bekannten Planlattentaschen haben den Nachteil, dass diese bei einer erforderlichen Höhenverstellung zur Anpassung an ein Ladegut nur durch hohen Zeitaufwand von der Runge gelöst werden können. Eine schnelle und einfache Höhenverstellung der Planlattentaschen ist somit nicht möglich.

Die US 5 020 948 A offenbart eine Einsteckplatte mit einem Ladungssicherungsgurt, die zur Sicherung von Ladegut in eine Schiene einsetzbar ist. Die Einsteckplatte weist dazu zwei Haken auf, durch die die Einsteckplatte mit der Schiene formschlüssig in Eingriff bringbar ist. Die Einsteckplatte kann lediglich lose mit der Schiene verbunden werden und weist somit keine selbstklemmende Funktion auf.

Aus der US 3 858 988 A und der US 2005/035340 A1 weitere Systeme bekannt, bei denen ein rohrförmiges Element, bspw. ein Steher, mehrere Schlitze aufweist, in die Haken einer Halterung einsetzbar sind. Die Halterung dient dabei zum Halten von Wänden oder Planken.

Der Erfindung liegt die Aufgabe zu Grunde, eine Halteeinrichtung für Nutzfahrzeuge anzugeben, welche durch eine verbesserte Geometrie schnell und einfach an einer Runge montierbar bzw. demontierbar ist und Zeitaufwand bei der Höhenverstellung der Halteeinrichtung zur Anpassung an unterschiedliche Ladegutabmessungen eingespart wird. Der Erfindung liegt ferner die Aufgabe zu Grunde, eine Anordnung einer Halteeinrichtung mit einer Runge, ein Nutzfahrzeug, ein Verfahren zur Herstellung einer Halteeinrichtung und ein Verfahren zur Montage einer Halteeinrichtung an einer Runge anzugeben. Erfindungsgemäß wird diese Aufgabe im Hinblick auf die Halteeinrichtung durch den Gegenstand der Anspruchs 1 gelöst. Hinsichtlich der Anordnung, des Nutzfahrzeugs und der Verfahren wird die vorstehend genannte Aufgabe jeweils durch den Gegenstand des Anspruchs 11 (Anordnung einer Halteeinrichtung mit einer Runge), des Anspruchs 14 (Nutzfahrzeug), des Anspruchs 15 (Verfahren zur Herstellung einer Halteeinrichtung) und des Anspruchs 18 (Verfahren zur Montage einer Halteeinrichtung an einer Runge) gelöst.

Die Erfindung beruht auf dem Gedanken, eine Halteeinrichtung für ein Nutzfahrzeug zur Aufnahme eines Ladungssicherungselements, insbesondere einer Ladungssicherungslatte, anzugeben. Die Halteeinrichtung weist einen quaderförmigen Grundkörper auf, in dem ein Aufnahmeraum ausgebildet ist, wobei eine erste Querseite und/oder eine erste Längsseite des Grundkörpers zur Aufnahme des Ladungssicherungselements offen ist. Der Grundkörper weist an einer Außenfläche einer zweiten Längsseite, insbesondere einer Rückwand, mehrere Befestigungsmittel zur Montage an einer Runge auf. Dabei ist wenigstens ein Befestigungsmittel durch einen T-förmigen Haken mit einem Längssteg und einem Quersteg gebildet, wobei der Quersteg durch den Längssteg mit dem Grundkörper verbunden ist und sich entlang der zweiten Längsseite des Grundkörpers erstreckt. Der Quersteg ist durch eine erste Befestigungsnase und eine zweite Befestigungsnase gebildet, wobei der Längssteg zwischen der ersten Befestigungsnase und der zweiten Befestigungsnase angeordnet ist.

Die Erfindung hat verschiedene Vorteile:
Durch die Bildung des wenigstens einen Befestigungsmittels als ein T-förmiger Haken wird eine Montage der Halteeinrichtung an einer Runge erheblich erleichtert. Die erste Befestigungsnase des T-förmigen Hakens bildet dabei eine Führung, die ein Einfädeln der Befestigungsmittel in Durchgangsöffnungen, insbesondere Langlöcher, der Runge vereinfacht und somit die Montagezeit reduziert. Greifen die Befestigungsmittel vollständig in die Durchgangsöffnungen der Runge ein, kann die Halteeinrichtung mit einem Montagewerkzeug nach unten geschoben werden, wodurch die Befestigungsmittel die Halteeinrichtung mit der Runge kraftschlüssig und/oder formschlüssig, insbesondere durch Klemmen verbinden. Ferner weist der T-förmige Haken die Funktion eines Sicherungshakens auf, da der Quersteg in seiner Länge größer als die Durchgangsöffnung der Runge ausgebildet ist. Wird daher die Klemmverbindung durch unvorhergesehene äußere Umstände gelöst, wird ein Herausfallen der Halteeinrichtung und somit des Ladungssicherungselements durch den Sicherungshaken verhindert. Dadurch wird eine ständige Sicherung des Ladeguts ermöglicht.

Die Erfindung hat den weiteren Vorteil, dass die Montage bzw. Demontage der Halteeinrichtung an der Runge durch die Ausbildung der Befestigungsmittel als Haken ebenso erleichtert wird. Durch die Haken kann eine Klemmverbindung der Halteeinrichtung mit der Runge einfach und schnell mit einem Montagewerkzeug hergestellt bzw. gelöst werden. Dadurch wird eine schnelle Höhenverstellung der Halteeinrichtungen an den Rungen und somit der Ladungssicherungselemente zur Anpassung an die verschiedenen Ladegutabmessungen ermöglicht. Des Weiteren wird dadurch der Zeitaufwand zur Montage bzw. Demontage der Halteeinrichtung reduziert, wodurch eine Flexibilität der Ladungssicherung erhöht wird.

Bevorzugte Ausführungsformen der Erfindung sind in den Unteransprüchen angegeben.

Bei einer besonders bevorzugten Ausführungsform ist die erste Befestigungsnase größer als die zweite Befestigungsnase ausgebildet. Dies hat den Vorteil, dass die erste Befestigungsnase bei der Montage der Halteeinrichtung an der Runge das Einfädeln des T-förmigen Hakens in die Durchgangsöffnung der Runge erleichtert und somit die Montagezeit der Halteeinrichtung an die Runge reduziert wird.

Bei einer bevorzugten Ausführungsform ist der T-förmige Haken an einem Ende der zweiten Längsseite des Grundkörpers angeordnet. Die erste Befestigungsnase des T-förmigen Hakens überragt dabei die erste Querseite des Grundkörpers. Vorteilhaft ist hier, dass bei der Montage der Halteeinrichtung an der Runge der Grundkörper beim Einfädeln des T-förmigen Hakens in die Durchgangsöffnung der Runge nicht blockierend wirkt. Die Montage der Halteeinrichtung wird auch hier erleichtert und somit Montagezeit eingespart.

Vorzugsweise ist wenigstens ein weiteres Befestigungsmittel durch einen L-förmigen Haken gebildet, der einen Längssteg und einen Quersteg aufweist. Der Quersteg ist durch eine weitere Befestigungsnase gebildet, die mit einem Ende bündig an einer Seitenfläche des Längsstegs abschließt. Bei der Montage wird der L-förmige Haken in eine weitere Durchgangsöffnung an der Runge eingeführt.

Durch ein Montagewerkzeug wird die Halteeinrichtung nach unten verschoben, bis der Längssteg am unteren Ende der Durchgangsöffnung anliegt. Durch das Verschieben der Halteeinrichtung wird durch den L-förmigen Haken mit der weiteren Befestigungsnase eine Klemmverbindung zwischen der Halteeinrichtung und der Runge hergestellt. Dies hat den Vorteil, dass die Halteeinrichtung einfach und schnell mittels eines Montagewerkzeugs mit der Runge verbindbar und gleichermaßen von der Runge lösbar ist.

Weiter vorzugsweise ist die weitere Befestigungsnase in entgegengesetzter Richtung zur ersten Querseite des Grundkörpers ausgebildet. Vorteilhaft ist hier, dass die weitere Befestigungsnase des L-förmigen Hakens und die zweite Befestigungsnase des T-förmigen Hakens somit in gleicher Richtung ausgebildet sind. Bei der Montage stellt daher jeder einzelne Haken eine Klemmverbindung mit der Runge her, wodurch eine stabile und feste Verbindung resultiert.

Der T-förmige Haken und der L-förmige Haken sind in einem Abstand zueinander angeordnet und erstrecken sich entlang der zweiten Längsseite des Grundkörpers. Des Weiteren sind der T-förmige Haken und der L-förmige Haken mit wenigstens einer Seitenfläche fluchtend zueinander angeordnet. Die fluchtende Anordnung der Haken hat den Vorteil, dass an der Runge die komplementären Durchgangsöffnungen, in die die Haken bei der Montage eingreifen, ebenso fluchtend angeordnet sein können. Dadurch wird eine schmale Bauform der Halteeinrichtung und der Runge ermöglicht, wodurch vorteilhafterweis ein Bauraum bzw. ein Laderaum vergrößert wird.

Bei einer bevorzugten Ausführungsform weist der quaderförmige Grundkörper auf einer zweiten Querseite, insbesondere in einem Boden, wenigstens eine Durchgangsöffnung, insbesondere ein Langloch auf. Die wenigstens eine Durchgangsöffnung ermöglicht eine einfache Handhabung der Halteeinrichtung, da die Durchgangsöffnung einerseits als Trageöffnung und andererseits bei der Montage als Positionierhilfe genutzt werden kann. Dadurch werden die Montagezeit reduziert und die Montage der Halteeinrichtung an der Runge erleichtert.

Bei einer weiteren bevorzugten Ausführungsform ist zwischen der ersten Querseite und der ersten Längsseite des quaderförmigen Grundkörpers ein Radius ausgebildet. Der Radius unterstützt ein einfaches Einlegen bzw. Einstecken der Ladungssicherungselemente. Des Weiteren wirkt der Radius als Stoß- und Verletzungsschutz, wodurch eine sichere Handhabung der Halteeinrichtung ermöglicht wird.

Die Halteeinrichtung ist vorzugsweise durch ein Blechbiegeteil gebildet. Die Ausführung der Halteeinrichtung als Blechbiegeteil ermöglicht vorteilhafterweise gegenüber bekannten Halteeinrichtungen, insbesondere Lattentaschen, eine schweißnahtlose Herstellung der Halteeinrichtung. Die Halteeinrichtung wird hierbei aus einem Metallblech, insbesondere einem Blechzuschnitt, aus einem Stück gebogen. Die Halteeinrichtung ist somit einstückig ausgebildet. Vorteilhafterweise werden durch den Entfall von Schweißnähten die Herstellungskosten der Halteeinrichtung maßgeblich reduziert.

Ein nebengeordneter Aspekt der Erfindung betrifft eine Anordnung einer Runge mit wenigstens einer Halteeinrichtung, wobei die Runge in wenigstens einer Seitenwand mehrere Durchgangsöffnungen, insbesondere mehrere Langlöcher aufweist, in die die Befestigungsmittel der Halteeinrichtung eingreifen. Durch mehrere Durchgangsöffnungen werden vorteilhafterweise unterschiedliche Montagepositionen der Halteeinrichtung an der Runge ermöglicht. Somit können die Positionen der Ladungssicherungselemente entsprechend auf die jeweiligen Ladegutabmessungen angepasst werden.

Die Runge weist ein C-förmiges Querschnittsprofil auf. Dies ermöglicht ein Eingreifen der L-förmigen und T-förmigen Haken in die Durchgangsöffnungen der Runge, da der C-förmige Querschnitt einen Innenraum bildet. Des Weiteren weist der C-förmige Querschnitt eine hohe Stabilität bei geringem Gewicht der Runge auf.

Vorzugsweise sind die Runge und die Halteeinrichtung lösbar miteinander verbunden. Dies hat den Vorteil, dass die Halteeinrichtung an unterschiedlichen Positionen an der Runge montiert bzw. demontiert werden kann und somit die Ladungssicherungselemente entsprechend auf die jeweiligen Ladegutabmessungen angepasst werden können.

Ein weiterer nebengeordneter Aspekt der Erfindung betrifft ein Nutzfahrzeug mit einer Anordnung einer Runge mit einer Halteeinrichtung. Durch die Anordnung einer Runge mit einer Halteeinrichtung der vorstehend genannten Art wird vorteilhafterweise eine flexible Verstellung der Positionen der Ladungssicherungselemente durch die einfache und schnelle Montage bzw. Demontage der Halteeinrichtungen ermöglicht. Die Positionen der Ladungssicherungselemente können somit genau auf die Ladegutabmessungen angepasst werden, wodurch eine ordnungsgemäße Sicherung des Ladeguts während des Transports und bei Stillstand des Nutzfahrzeugs ermöglicht wird.

Bei einem erfindungsgemäßen Verfahren zur Herstellung einer Halteeinrichtung wird aus einem Grundblech durch wenigstens einen Schneidprozess, insbesondere einen Laserschneidprozess, ein Blechzuschnitt geschnitten. Weiter wird wenigstens ein Befestigungsmittel durch wenigstens einen Umformschritt, insbesondere einen Biegeschritt, an dem Blechzuschnitt ausgebildet. Anschließend wird der Blechzuschnitt durch wenigstens einen weiteren Umformschritt, insbesondere einen weiteren Biegeschritt, zu einem quaderförmigen Grundkörper verformt.

Bei einer bevorzugten Ausführungsform des erfindungsgemäßen Verfahrens zur Herstellung einer Halteeinrichtung wird der Blechzuschnitt aus dem Grundblech derart zugeschnitten, sodass an dem Blechzuschnitt wenigstens ein Befestigungsmittel mit einem T-förmigen Hakenprofil ausgebildet wird.

Bei einer weiteren bevorzugten Ausführungsform des erfindungsgemäßen Verfahrens zur Herstellung einer Halteeinrichtung wird der Blechzuschnitt aus dem Grundblech derart zugeschnitten, sodass an dem Blechzuschnitt wenigstens ein weiteres Befestigungsmittel mit einem L-förmigen Hakenprofil ausgebildet wird.

Bei einem erfindungsgemäßen Verfahren zur Montage einer Halteeinrichtung an einer Runge wird eine Halteeinrichtung mit einer ersten Querseite nach oben ausgerichtet und in einem Winkel an eine Runge geführt, sodass die erste Querseite näher an einer Seitenwand der Runge liegt als eine zweite Querseite der Halteeinrichtung. Weiter wird die Halteeinrichtung mit wenigstens einem Befestigungsmittel in eine Durchgangsöffnung der Runge derart eingeführt, bis ein Längssteg des Befestigungsmittels an einem oberen Ende der Durchgangsöffnung anliegt. Das wenigstens eine Befestigungsmittel weist dabei ein T-förmiges Hakenprofil auf. Durch ein Kippen der Halteeinrichtung greift wenigstens ein weiteres Befestigungsmittel der Halteeinrichtung in wenigstens eine weitere Durchgangsöffnung der Runge ein. Eine Außenfläche einer zweiten Längsseite der Halteeinrichtung liegt an der Seitenwand der Runge direkt an. Anschließend wird die Halteeinrichtung durch ein Montagewerkzeug, insbesondere durch einen Hammer, nach unten geschoben, bis der Längssteg des Befestigungsmittels an einem unteren Ende der Durchgangsöffnung der Runge anliegt. Die Halteeinrichtung wird dadurch mit der Runge kraft- und/oder formschlüssig lösbar verbunden.

Zu den Vorteilen des Verfahrens zur Herstellung einer erfindungsgemäßen Halteeinrichtung wird auf die im Zusammenhang mit der Halteeinrichtung erläuterten Vorteile verwiesen. Ferner wird zu den Vorteilen des Verfahrens zur Montage einer Halteeinrichtung an einer Runge auf die im Zusammenhang mit der Halteeinrichtung und der Anordnung einer Runge mit einer Halteeinrichtung erläuterten Vorteile verwiesen. Darüber hinaus können die Verfahren alternativ oder zusätzlich einzelne oder eine Kombination mehrerer zuvor in Bezug auf die Halteeinrichtung und die Anordnung einer Runge mit einer Halteeinrichtung genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Halteeinrichtung und die erfindungsgemäße Anordnung einer Runge mit einer Halteeinrichtung ausgestaltet sein können.

In diesen zeigen
- Fig. 1: eine Seitenansicht einer Halteeinrichtung nach einem bevorzugten erfindungsgemäßen Ausführungsbeispiel;
- Fig. 2: eine Rückansicht der Halteeinrichtung nach Fig. 1;
- Fig. 3: eine Draufsicht der Halteeinrichtung nach Fig. 1 und Fig. 2;
- Fig. 4: eine perspektivische Ansicht einer Runge, insbesondere einer Mittelrunge, nach einem bevorzugten erfindungsgemäßen Ausführungsbeispiel;
- Fig. 5: eine Detailansicht einer Seitenwand der Runge nach Fig. 4;
- Fig. 6: eine perspektivische Detailansicht einer Anordnung nach einem bevorzugten erfindungsgemäßen Ausführungsbeispiel der Runge nach Fig. 4 mit zwei Halteeinrichtungen nach Fig. 1 bis Fig. 3, und
- Fig. 7: eine perspektivische Ansicht einer Anordnung nach einem weiteren bevorzugten erfindungsgemäßen Ausführungsbeispiel der Runge nach Fig. 4 mit sechs Halteeinrichtungen nach Fig. 1 bis Fig. 3.

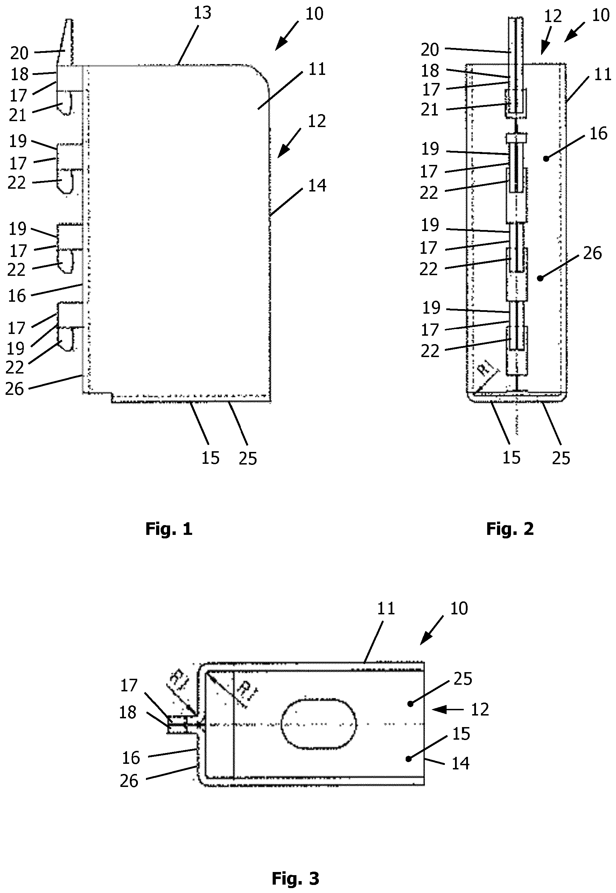

In der Seitenansicht gemäß Fig. 1 ist eine Halteeinrichtung 10 gezeigt, die einen quaderförmigen Grundkörper 11 und mehrere Befestigungsmittel 17 aufweist.

Der quaderförmige Grundkörper 11 umfasst dabei eine erste Querseite 13 und eine erste Längsseite 14. Des Weiteren umfasst der Grundkörper 11 eine zweite Querseite 15 und eine zweite Längsseite 16. Die zweite Querseite 15 bildet einen Boden 25 des Grundkörpers 11 und die zweite Längsseite 16 eine Rückwand 26 des Grundkörpers 11. In der folgenden Beschreibung wird daher die zweite Querseite 15 als Boden 25 und die zweite Längsseite 16 als Rückwand 26 bezeichnet. Des Weiteren weist der Grundkörper 11 zwei Seitenwände auf, die jeweils durch eine geschlossene Fläche gebildet sind. Die Seitenwände können auch Öffnungen aufweisen. Die Öffnungen können dabei eine Handhabung der Halteeinrichtung 10 erleichtern. Des Weiteren können die Öffnungen auch zur Arretierung eines nicht dargestellten Ladungssicherungselements dienen.

Im Grundkörper 11 ist ein Aufnahmeraum 12 ausgebildet, der an der ersten Querseite 13 und der ersten Längsseite 14 nach außen hin offen ist. Über die erste Querseite 13 und/oder die erste Längsseite 14 ist ein nicht dargestelltes Ladungssicherungselement in den Aufnahmeraum 12 einlegbar oder einsteckbar. Ladungssicherungselemente sind beispielsweise Ladungssicherungslatten in Form von Einstecklatten oder Einlegelatten. Ferner können die Ladungssicherungselemente auch durch Balken, Stangen oder andere Elemente gebildet sein. Die Ladungssicherungselemente können auch unterschiedliche Querschnittsprofile aufweisen, die ein Einlegen oder Einstecken der Ladungssicherungselemente in die Halteeinrichtung 10 vereinfachen. Die Querschnittsprofile können dabei derart ausgebildet sein, dass die Ladungssicherungselemente mit den Halteeinrichtungen 10 formschlüssig und/oder kraftschlüssig verbindbar sind.

Der Aufnahmeraum 12 kann auch an der ersten Querseite 13 oder der ersten Längsseite 14 geschlossen ausgebildet sein. Ist bspw. der Aufnahmeraum 12 an der ersten Längsseite 14 geschlossen ausgebildet, kann in den Aufnahmeraum 12 ein Ladungssicherungselement eingreifen und bspw. gegen eine Innenfläche der ersten Längsseite 14 verspannt werden. Das Ladungssicherungselement kann somit gegen ein Herausfallen aus der Halteeinrichtung 10 gesichert werden. Ist bspw. der Aufnahmeraum 12 an der ersten Querseite 13 geschlossen ausgebildet, kann das Ladungssicherungselement über die offene erste Längsseite 14 eingelegt oder eingesteckt werden. Die geschlossene erste Querseite 13 kann dadurch als ein Sicherungsanschlag nach oben hin gegen ein Herausfallen des Ladungssicherungselements wirken.

Der Grundkörper 11 weist zwischen der ersten Querseite 13 und der ersten Längsseite 14 einen Radius auf. Durch den Radius ist eine Ecke jeweils einer Seitenwand abgerundet, die durch jeweils ein Ende der ersten Querseite 13 und der ersten Längsseite 14 gebildet ist. Des Weiteren weist der Grundkörper 11 eine Eckaussparung an einer weiteren Ecke auf. Die weitere Ecke ist durch jeweils ein Ende der Rückwand 26 und des Bodens 25 gebildet. Die Aussparung den durchdringt dabei den Grundkörper 11 vollständig.

An einer Außenfläche der Rückwand 26 sind mehrere Befestigungsmittel 17, insgesamt vier Befestigungsmittel 17 angeordnet. Ein Befestigungsmittel 17 ist dabei durch einen T-förmigen Haken 18 gebildet. Der T-förmige Haken 18 weist einen Längssteg und einen Quersteg auf, wobei der Quersteg durch den Längssteg mit dem Grundkörper 11 verbunden ist. Der Längssteg des T-förmigen Hakens 18 ist dabei stoffschlüssig mit dem Grundkörper verbunden. Die Verbindung kann auch durch eine Kraftschlussverbindung und/oder eine Formschlussverbindung gebildet sein. Der Längssteg des T-förmigen Hakens 18 ist von der Außenfläche der Rückwand 26 senkrecht abstehend, insbesondere rechtwinklig ausgebildet. Der Längssteg des T-förmigen Hakens 18 kann auch in einem definierbaren Winkel zur Außenfläche der Rückwand 26 ausgebildet sein. Mit anderen Worten kann der Längssteg des T-förmigen Hakens 18 von der Außenfläche der Rückwand auch schräg abstehend ausgebildet sein. Der Quersteg des T-förmigen Hakens 18 erstreckt sich entlang der zweiten Längsseite 16, insbesondere einer Längsseite der Rückwand 26.

Ferner umfasst der Quersteg des T-förmigen Hakens 18 eine erste Befestigungsnase 20 und eine zweite Befestigungsnase 21. Der Längssteg des T-förmigen Hakens 18 ist dabei zwischen der ersten Befestigungsnase 20 und der zweiten Befestigungsnase 21 angeordnet. Im Wesentlichen sind die erste Befestigungsnase 20 und die zweite Befestigungsnase 21 von jeweils einer innenliegenden Seitenfläche des Längsstegs des T-förmigen Hakens 18 senkrecht abstehend, insbesondere rechtwinklig ausgebildet. Die erste Befestigungsnase 20 und die zweite Befestigungsnase 21 können auch in einem Winkel zur innenliegenden Seitenfläche des Längsstegs des T-förmigen Hakens 18 ausgebildet sein. Die erste Befestigungsnase 20 und die zweite Befestigungsnase 21 sind an den innenliegenden Seitenflächen des Längsstegs des T-förmigen Hakens 18 direkt gegenüber angeordnet. Die erste Befestigungsnase 20 ist größer als die zweite Befestigungsnase 21 ausgebildet. Die erste Befestigungsnase 20 weist dabei in einer Längsrichtung des Querstegs des T-förmigen Hakens 18 eine längere Längsseite als die zweite Befestigungsnase 21 auf.

Des Weiteren sind eine außenliegende Seitenfläche des Längsstegs des T-förmigen Hakens 18 und jeweils eine querliegende Seitenfläche der ersten Befestigungsnase 20 und der zweiten Befestigungsnase 21 fluchtend zueinander ausgebildet. Die außenliegende Seitenfläche des Längsstegs des T-förmigen Hakens 18 ist dabei im Wesentlichen flächenparallel zu Außenflächen der Seitenwände des Grundkörpers 11 ausgebildet. Die außenliegende Seitenfläche des Längsstegs des T-förmigen Hakens 18 kann auch einen Winkel zwischen der außenliegenden Seitenfläche des Längsstegs des T-förmigen Hakens 18 und den Außenflächen der Seitenwände des Grundkörpers 11 aufweisen.

Wie in der Seitenansicht gemäß Fig. 1 gezeigt, weist die erste Befestigungsnase 20 in der Längsrichtung des Querstegs im Wesentlichen einen keilförmigen Querschnitt auf. Der keilförmige Querschnitt umfasst vier Seitenlängen, wobei drei Seitenlängen jeweils rechtwinklig zueinander ausgebildet sind. Die vierte Seitenlänge bildet dabei eine Verjüngung des keilförmigen Querschnitts vom Längssteg des Hakens 18 ausgehend in Richtung eines freien Endes der ersten Befestigungsnase 20. Mit anderen Worten läuft die erste Befestigungsnase 20 vom Längssteg ausgehend in Richtung der Außenfläche der Rückwand 26 keilförmig zu. Die erste Befestigungsnase 20 kann auch eine andere Querschnittsform aufweisen.

Ferner ist in der Seitenansicht gemäß Fig. 1 ersichtlich, dass die zweite Befestigungsnase 21 in der Längsrichtung des Querstegs im Wesentlichen eine rechteckige Querschnittsform aufweist. Die rechteckige Querschnittsform ist dabei an einem freien Ende der zweiten Befestigungsnase 21 abgerundet ausgebildet. An einer Innenseite der zweiten Befestigungsnase 21, die der Außenfläche der Rückwand 26 zugewandt ist, weist die rechteckige Querschnittsform ebenso eine minimale Abrundung auf. Die minimale Abrundung an der Innenseite der zweiten Befestigungsnase 21 bildet eine Materialeinschnürung an einer Basis des Querstegs, die an den Längssteg des T-förmigen Hakens 18 angrenzt. Die Befestigungsnase 21 kann auch eine andere Querschnittsform aufweisen.

Wie in Fig. 1 gezeigt, weist die Halteeinrichtung drei Befestigungsmittel 17 auf, die jeweils durch einen L-förmigen Haken 19 gebildet sind. Der L-förmige Haken 19 weist ebenso einen Längssteg und einen Quersteg auf, wobei der Quersteg durch eine weitere Befestigungsnase 22 gebildet ist. Die weitere Befestigungsnase 22 schließt dabei mit einem Ende an einer Seitenfläche des Längsstegs bündig ab. Der Quersteg des L-förmigen Hakens 19 ist durch den Längssteg mit dem Grundkörper 11 verbunden. Der Längssteg des L-förmigen Hakens 19 ist dabei stoffschlüssig mit dem Grundkörper verbunden. Die Verbindung kann auch durch eine Kraftschlussverbindung und/oder eine Formschlussverbindung gebildet sein. Der Längssteg des L-förmigen Hakens 19 ist von der Außenfläche der Rückwand 26 senkrecht abstehend, insbesondere rechtwinklig ausgebildet. Der Längssteg des Hakens 19 kann auch in einem definierbaren Winkel zur Außenfläche der Rückwand 26 ausgebildet sein. Der Quersteg des L-förmigen Hakens 19 erstreckt sich entlang der zweiten Längsseite 16, insbesondere einer Längsseite der Rückwand 26.

Die weitere Befestigungsnase 22 des L-förmigen Hakens 19 ist wie die vorstehend beschriebene zweite Befestigungsnase 21 ausgebildet. Die weitere Befestigungsnase 22 weist daher ein identische Querschnittsform zur Querschnittsform der zweiten Befestigungsnase 21 auf. Die weitere Befestigungsnase 22 des L-förmigen Hakens 19 kann auch eine andere Querschnittsform als die zweite Befestigungsnase 21 des T-förmigen Hakens 18 aufweisen.

Die zweite Befestigungsnase 21 des T-förmigen Hakens 18 und die weitere Befestigungsnase 22 des L-förmigen Hakens 19 weisen zwischen der jeweiligen Innenseite und der Außenfläche der Rückwand 26 des Grundkörpers 11 einen Abstand auf. Der Abstand kann größer oder identisch einer Wandstärke einer Seitenwand einer nicht dargestellten Runge 23 sein. Beispielsweise ist der Abstand kleiner als die Wandstärke der Seitenwand der Runge 23. Dies hat den Vorteil, dass bei einer Montage der Halteeinrichtung 10 an der Runge 23, auf die später näher eingegangen wird, eine verstärkte Klemmverbindung zwischen der Halteeinrichtung 10 und der Runge 23 hergestellt werden kann. Die zweite Befestigungsnase 21 und die jeweilige weitere Befestigungsnase 22 greifen dabei in die Wandstärke der Seitenwand ein. Es entsteht somit eine stabile und robuste Klemmverbindung.

Der T-förmige Haken 18 ist an einem längsseitigen Ende der Außenfläche der Rückwand 26 angeordnet. Der Längssteg des T-förmigen Hakens 18 schließt dabei mit einer Seitenfläche bündig mit dem längsseitigen Ende der Außenfläche der Rückwand 26 ab. Die erste Befestigungsnase 20 des T-förmigen Hakens 18 überragt dabei die erste Querseite 13 des Grundkörpers 11. Der eine T-förmige Haken 18 und die L-förmigen Haken 19 sind jeweils in einem Abstand zueinander angeordnet. Der Abstand ist dabei identisch einem Abstand zwischen Durchgangsöffnungen 24 der nicht dargestellten Runge 23 ausgebildet. Somit können bei der Montage die Befestigungsmittel 17 der Halteeinrichtung 10 in die Durchgangsöffnungen 24 der Runge 23 eingreifen und die Halteeinrichtung 10 mit der Runge 23 kraftschlüssig und/oder formschlüssig, insbesondere durch Klemmen, verbunden werden. Der T-förmige Haken 18 und die L-förmigen Haken 19 sind derart an der Außenfläche der Rückwand 26 angeordnet, sodass die zweite Befestigungsnase 21 des T-förmigen Hakens 18 und die weiteren Befestigungsnasen 22 des L-förmigen Hakens 19 in entgegengesetzter Richtung zur ersten Querseite 13 des Grundkörpers 11 ausgebildet sind.

Wie in Fig. 2 gezeigt, erstrecken sich der T-förmige Haken 18 und die L-förmigen Haken 19 entlang der Längsseite der Rückwand 26. Der T-förmige Haken 18 und die L-förmigen Haken 19 sind dabei mit jeweils einer Seitenfläche fluchtend zueinander angeordnet. Der T-förmige Haken 18 und die L-förmigen Haken 19 können auch in einem seitlichen Abstand zueinander versetzt angeordnet sein. Der T-förmige Haken 18 und die L-förmigen Haken 19 sind auf einer zentralen Längsachse der Rückwand 26 angeordnet. Die zentrale Längsachse ist dabei symmetrisch zwischen den Seitenwänden des Grundkörpers 11 ausgebildet und verläuft von der ersten Querseite 13 des Grundkörpers 11 hin zum Boden 25. Die jeweiligen Haken können auch an unterschiedlichen Positionen an der Außenfläche der Rückwand 26 angeordnet sein.

Gemäß Fig. 3 weist der Grundkörper 11 im Boden 25 eine Durchgangsöffnung auf. Die Durchgangsöffnung ist als Langloch ausgebildet. Die Durchgangsöffnung kann auch eine Kreisform, eine Rechtecksform, eine Ellipsenform oder eine andere Form aufweisen. Im Boden 25 können auch mehrere Durchgangsöffnungen ausgebildet sein. Die Durchgangsöffnung ermöglicht eine einfache Handhabung der Halteeinrichtung 10 bei der Montage bzw. Demontage der Halteeinrichtung 10 an einer nicht dargestellten Runge 23. Auf die Montage der Halteeinrichtung 10 an einer Runge 23 wird später näher eingegangen.

Wie in Fig. 3 ersichtlich, ist die Halteeinrichtung 10 durch ein Blechbiegeteil gebildet. Das Blechbiegeteil weist dabei eine Wandstärke auf. Beispielsweise weist das Blechbiegeteil eine Wandstärke von 2 mm auf. Die Wandstärke kann aber auch einen anderen Wert aufweisen. Des Weiteren ist das Blechbiegeteil mit einem Biegeradius von 1 mm gebogen. Das Blechbiegeteil kann auch andere Biegeradien aufweisen.

Bei einem Verfahren zur Herstellung der Halteeinrichtung 10, insbesondere des Blechbiegeteils, wird aus einem Grundblech durch wenigstens einen Schneidprozess ein Blechzuschnitt geschnitten. Der Schneidprozess umfasst wenigstens einen Laserschneidprozess. Des Weiteren kann der Schneidprozess auch wenigstens einen Stanzprozess oder wenigstens einen anderen Schneidprozess umfassen. Der Blechzuschnitt entspricht dabei einer Blechabwicklung des Blechbiegeteils. Der Blechzuschnitt wird dabei aus dem Grundblech derart zugeschnitten, sodass an dem Blechzuschnitt ein Befestigungsmittel 17 mit einem T-förmigen Hakenprofil ausgebildet wird. Der Blechzuschnitt wird des Weiteren aus dem Grundblech derart zugeschnitten, sodass an dem Blechzuschnitt drei weitere Befestigungsmittel 17 mit einem L-förmigen Hakenprofil ausgebildet werden. Anschließend werden die Befestigungsmittel 17 durch wenigstens einen Umformschritt am Blechzuschnitt verformt. Der wenigstens eine Umformschritt umfasst dabei wenigsten einen Biegeschritt, durch den die Befestigungsmittel 17 in einem definierbaren Winkel am Blechzuschnitt gebogen werden. Ferner wird der Blechzuschnitt durch wenigstens einen weiteren Umformschritt zu einem quaderförmigen Grundkörper 11 verformt. Der wenigstens eine weitere Umformschritt umfasst dabei ebenso wenigstens einen Biegeschritt. Die Umformschritte können auch andere Verfahrensschritte zur Umformung des Blechzuschnitts umfassen.

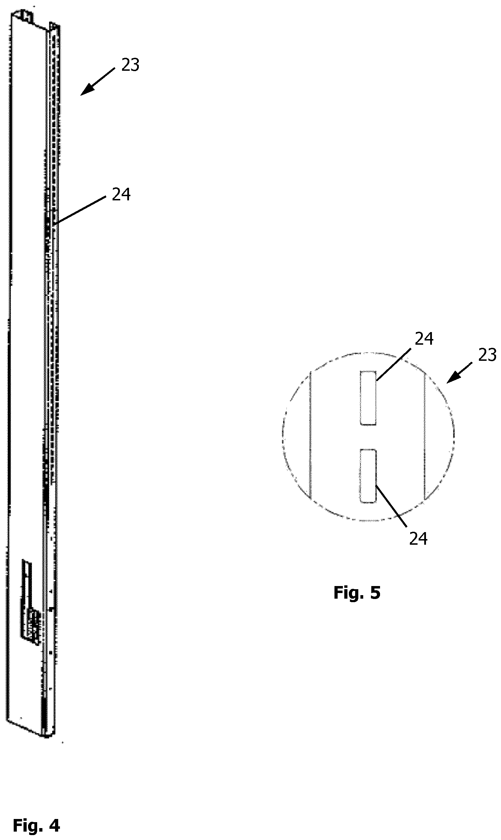

In Fig. 4 ist eine perspektivische Ansicht einer Runge 23, insbesondere einer Mittelrunge gezeigt, die ein C-förmiges Querschnittsprofil aufweist. Die Runge 23 umfasst dabei zwei Seitenwände, in denen jeweils eine Vielzahl von Durchgangsöffnungen 24 ausgebildet sind. Die Seitenwände sind am C-förmigen Querschnittsprofil der Runge 23 gegenüberliegend ausgebildet. Beispielsweise sind die Seitenwände parallel zueinander ausgebildet. Die Seitenwände können auch in einer anderen Stellung zueinander ausgebildet sein. Die Durchgangsöffnungen 24 sind durch Langlöcher gebildet. Die Langlöcher sind mit inneren Längsflächen fluchtend zueinander auf einer zentralen Längsachse der jeweiligen Seitenwand der Runge 23 angeordnet. Die Langlöcher können auch in einem seitlichen Abstand versetzt zueinander in den jeweiligen Seitenwänden der Runge 23 ausgebildet sein. Des Weiteren sind die Langlöcher in einem Abstand auf der zentralen Längsachse der jeweiligen Seitenwand der Runge 23 derart angeordnet, sodass die Befestigungsmittel 17 der nicht dargestellten Halteeinrichtung 10 gemäß Fig. 1 bis 3 in die Langlöcher der Runge 23 eingreifen können. Die Langlöcher sind, wie in Fig. 5 ersichtlich, im Wesentlichen rechteckförmig ausgebildet und weisen gleiche Abmessungen auf. Die Langlöcher können auch unterschiedliche Abmessungen aufweisen.

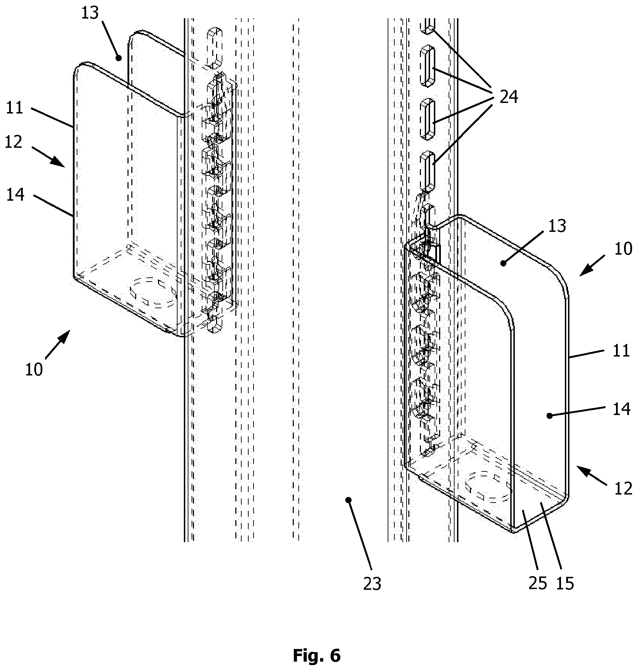

Fig. 6 zeigt eine perspektivische Detailansicht einer Anordnung der Runge 23 gemäß Fig. 4 mit zwei Halteeinrichtungen 10 gemäß Fig. 1 bis 3 in einem montierten Zustand. Die jeweilige Halteeinrichtung 10 ist dabei kraftschlüssig mit der Runge 23 verbunden. Die kraftschlüssige Verbindung ist dabei durch eine Klemmverbindung gebildet. Die Verbindung kann auch durch eine formschlüssige und/oder stoffschlüssige Verbindung gebildet sein. Die Halteeinrichtungen 10 sind auf einer gleichen Höhe an der jeweiligen Seitenwand der Runge 23 gegenüberliegend angeordnet. Die Halteeinrichtungen 10 können auch an unterschiedlichen Positionen an der jeweiligen Seitenwand der Runge 23 angeordnet sein. Der T-förmige Haken 18 weist hierbei eine Funktion eines Sicherungshakens auf, da der Quersteg des T-förmigen Hakens 18 in seiner Länge größer als die Durchgangsöffnung 24 der Runge 23 ausgebildet ist. Im montierten Zustand der Halteeinrichtung 10 an der Runge 23 überragt die erste Befestigungsnase 20 auf einer Innenseite der Seitenwand der Runge 23 ein oberes Ende der Durchgangsöffnung 24 der Runge 23. Wird daher die Klemmverbindung durch unvorhergesehene äußere Umstände gelöst, kann ein Herausfallen der Halteeinrichtung 10 und somit des Ladungssicherungselements durch den Sicherungshaken verhindert werden.

Bei der Montage der jeweiligen Halteeinrichtung 10 an der Runge 23 wird die Halteeinrichtung 10 in einem ersten Montageschritt mit der ersten Querseite 13, die eine offene Seite bildet, nach oben ausgerichtet und in einem Winkel an die Runge 23 geführt. Der Winkel ist zwischen der Außenfläche der Halteeinrichtung 10 und der jeweiligen Seitenwand der Runge 23 ausgebildet. Beispielsweise entspricht der Winkel einem spitzen Winkel. Die Halteeinrichtung 10 wird dabei derart an die Runge 23 geführt, sodass die erste Querseite 13 näher an der Seitenwand der Runge 23 liegt als der Boden 25 der Halteeinrichtung 10. In einem zweiten Montageschritt wird die Halteeinrichtung 10 mit dem Befestigungsmittel 17, das durch den T-förmigen Haken 18 gebildet ist, in die Durchgangsöffnung 24 der Runge 23 eingeführt. Der T-förmige Haken 18 wird dabei derart eingeführt, bis der Längssteg des T-förmigen Hakens 18 an einem oberen Ende der Durchgangsöffnung 24 anliegt. In einem dritten Montageschritt greifen durch ein Kippen der Halteeinrichtung 10 die L-förmigen Haken 19 in die weiteren Durchgangsöffnungen 24 der Runge 23 ein. Die Halteeinrichtung 10 wird derart gekippt, sodass die Außenfläche der Rückwand 26 an der Seitenwand der Runge 23 direkt anliegt.

In einem abschließenden vierten Montageschritt wird die Halteeinrichtung 10 mit einem nicht dargestellten Montagewerkzeug nach unten geschoben, bis der Längssteg des T-förmigen Hakens 18 und der L-förmigen Haken 19 an einem unteren Ende der Durchgangsöffnungen 24 der Runge 23 anliegt. Die Halteeinrichtung 10 wird dadurch kraftschlüssig mit der Runge 23 verbunden. Die kraftschlüssige Verbindung, insbesondere die Klemmverbindung, wird durch ein verkeilen des T-förmigen Hakens 18 und der L-förmigen Haken 19 mit der Runge 23 hergestellt. Als Montagewerkzeuge wird ein Hammer, vorzugsweise ein Gummihammer, oder ein anderes Montagewerkzeug verwendet.

Bei einer Demontage der Halteeinrichtungen 10 werden die vorstehend beschriebenen Montageschritte 1 bis 4 in umgekehrter Reihenfolge durchgeführt. Generell kann die Montage bzw. Demontage zusätzliche Zwischenschritte aufweisen.

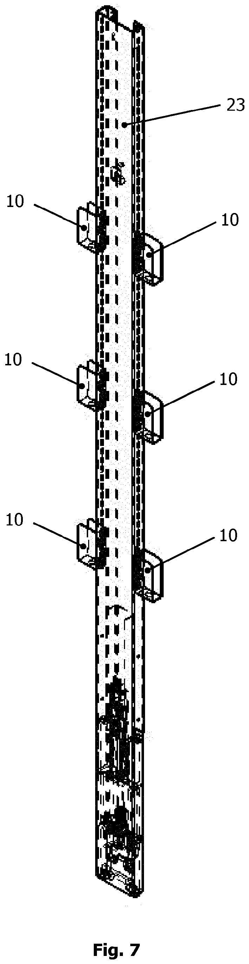

In Fig. 7 ist eine perspektivische Ansicht einer Anordnung der Runge 23 gemäß Fig. 4 mit sechs Halteeinrichtungen 10 gemäß Fig. 1 bis 3 in einem montierten Zustand gezeigt. Die Halteeinrichtungen 10 sind jeweils als Paar auf drei unterschiedlichen Positionen an der Runge 23 montiert. Jeweils ein Paar der Halteeinrichtungen 10 sind auf einer gleichen Höhe an der jeweiligen Seitenwand der Runge 23 gegenüberliegend angeordnet. Die jeweiligen Halteeinrichtungen 10 können auch an unterschiedlichen Positionen an der jeweiligen Seitenwand der Runge 23 angeordnet sein. Die Verbindung der jeweiligen Halteeinrichtung 10 mit der Runge 23, die Montage der Halteeinrichtungen 10 an der Runge 23 sowie die Demontage der Halteeinrichtung 10 erfolgt wie in Fig. 6 beschrieben.

### Bezugszeichenliste

- 10: Halteeinrichtung
- 11: Quaderförmiger Grundkörper
- 12: Aufnahmeraum
- 13: erste Querseite
- 14: erste Längsseite
- 15: zweite Querseite
- 16: zweite Längsseite
- 17: Befestigungsmittel
- 18: T-förmiger Haken
- 19: L-Förmiger Haken
- 20: erste Befestigungsnase
- 21: zweite Befestigungsnase
- 22: weitere Befestigungsnase
- 23: Runge
- 24: Durchgangsöffnung der Runge
- 25: Boden
- 26: Rückwand

## Patentansprüche

1. Halteeinrichtung (10) für ein Nutzfahrzeug zur Aufnahme eines Ladungssicherungselements, insbesondere einer Ladungssicherungslatte, wobei die Halteeinrichtung (10) einen quaderförmigen Grundkörper (11) aufweist, in dem ein Aufnahmeraum (12) ausgebildet ist, wobei eine erste Querseite (13) und/oder eine erste Längsseite (14) des Grundkörpers (11) zur Aufnahme des Ladungssicherungselements offen ist, wobei der Grundkörper (11) an einer Außenfläche einer zweiten Längsseite (16), insbesondere einer Rückwand (26), mehrere Befestigungsmittel (17) zur Montage an einer Runge (23) aufweist,
**dadurch gekennzeichnet, dass**
wenigstens ein Befestigungsmittel (17) durch einen T-förmigen Haken (18) mit einem Längssteg und einem Quersteg gebildet ist, wobei der Quersteg durch den Längssteg mit dem Grundkörper (11) verbunden ist und sich entlang der zweiten Längsseite (16) des Grundkörpers (11) erstreckt, und der Quersteg durch eine erste Befestigungsnase (20) und eine zweite Befestigungsnase (21) gebildet ist, wobei der Längssteg zwischen der ersten Befestigungsnase (20) und der zweiten Befestigungsnase (21) angeordnet ist.

2. Halteeinrichtung nach Anspruch 1,
**dadurch gekennzeichnet, dass**
die erste Befestigungsnase (20) größer als die zweite Befestigungsnase (21) ausgebildet ist.

3. Halteeinrichtung nach Anspruch 1 oder 2,
**dadurch gekennzeichnet, dass**
der T-förmige Haken (18) an einem Ende der zweiten Längsseite (16) des Grundkörpers (11) angeordnet ist und die erste Befestigungsnase (20) des T-förmigen Hakens (18) die erste Querseite (13) des Grundkörpers (11) überragt.

4. Halteeinrichtung nach einem der vorhergehenden Ansprüche,
**dadurch gekennzeichnet, dass**
wenigstens ein weiteres Befestigungsmittel (17) durch einen L-förmigen Haken (19) gebildet ist, der einen Längssteg und einen Quersteg aufweist, wobei der Quersteg durch eine weitere Befestigungsnase (22) gebildet ist, die mit einem Ende bündig an einer Seitenfläche des Längsstegs abschließt.

5. Halteeinrichtung nach Anspruch 4,
**dadurch gekennzeichnet, dass**
die weitere Befestigungsnase (22) in entgegengesetzter Richtung zur ersten Querseite (13) des Grundkörpers (11) ausgebildet ist.

6. Halteeinrichtung nach einem der vorhergehenden Ansprüche,
**dadurch gekennzeichnet, dass**
der T-förmige Haken (18) und der L-förmige Haken (19) in einem Abstand zueinander angeordnet sind und sich entlang der zweiten Längsseite (16) des Grundkörpers (11) erstrecken.

7. Halteeinrichtung nach einem der vorhergehenden Ansprüche,
**dadurch gekennzeichnet, dass**
der T-förmige Haken (18) und der L-förmige Haken (19) mit wenigstens einer Seitenfläche fluchtend zueinander angeordnet sind.

8. Halteeinrichtung nach einem der vorhergehenden Ansprüche,
**dadurch gekennzeichnet, dass**
der quaderförmige Grundkörper (11) auf einer zweiten Querseite (15), insbesondere in einem Boden (25), wenigstens eine Durchgangsöffnung, insbesondere ein Langloch aufweist.

9. Halteeinrichtung nach einem der vorhergehenden Ansprüche,
**dadurch gekennzeichnet, dass**
zwischen der ersten Querseite (13) und der ersten Längsseite (14) des quaderförmigen Grundkörpers (11) ein Radius ausgebildet ist.

10. Halteeinrichtung nach einem der vorhergehenden Ansprüche,
**dadurch gekennzeichnet, dass**
die Halteeinrichtung (10) durch ein Blechbiegeteil gebildet ist.

11. Anordnung einer Runge mit wenigstens einer Halteeinrichtung (10) nach einem der vorhergehenden Ansprüche,
**dadurch gekennzeichnet, dass**
die Runge (23) in wenigstens einer Seitenwand mehrere Durchgangsöffnungen (24), insbesondere mehrere Langlöcher aufweist, in die die Befestigungsmittel (17) der Halteeinrichtung (10) eingreifen.

12. Anordnung nach Anspruch 11,
**dadurch gekennzeichnet, dass**
die Runge (23) ein C-förmiges Querschnittsprofil aufweist.

13. Anordnung nach Anspruch 11 bis 12,
**dadurch gekennzeichnet, dass**
die Runge (23) und die Halteeinrichtung (10) lösbar miteinander verbunden sind.

14. Nutzfahrzeug mit einer Anordnung einer Runge (23) mit einer Halteeinrichtung (10) nach einem der Ansprüche 11 bis 13.

15. Verfahren zur Herstellung einer Halteeinrichtung (10) nach einem der Ansprüche 1 bis 10, bei dem
- aus einem Grundblech durch wenigstens einen Schneidprozess, insbesondere einen Laserschneidprozess, ein Blechzuschnitt geschnitten wird;
- wenigstens ein Befestigungsmittel (17) durch wenigstens einen Umformschritt, insbesondere einen Biegeschritt, an dem Blechzuschnitt ausgebildet wird, und
- der Blechzuschnitt durch wenigstens einen weiteren Umformschritt, insbesondere einen weiteren Biegeschritt, zu einem quaderförmigen Grundkörper (11) verformt wird.

16. Verfahren nach Anspruch 15,
**dadurch gekennzeichnet, dass**
der Blechzuschnitt aus dem Grundblech derart zugeschnitten wird, sodass an dem Blechzuschnitt wenigstens ein Befestigungsmittel (17) mit einem T-förmigen Hakenprofil ausgebildet wird.

17. Verfahren nach Anspruch 15,
**dadurch gekennzeichnet, dass**
der Blechzuschnitt aus dem Grundblech derart zugeschnitten wird, sodass an dem Blechzuschnitt wenigstens ein weiteres Befestigungsmittel (17) mit einem L-förmigen Hakenprofil ausgebildet wird.

18. Verfahren zur Montage einer Halteeinrichtung (10) nach einem der Ansprüche 1 bis 10 an einer Runge (23), bei dem
- eine Halteeinrichtung (10) mit einer ersten Querseite (13) nach oben ausgerichtet und in einem Winkel an eine Runge (23) geführt wird, sodass die erste Querseite (13) näher an einer Seitenwand der Runge (23) liegt als eine zweite Querseite (15) der Halteeinrichtung (10);
- die Halteeinrichtung (10) mit wenigstens einem Befestigungsmittel (17), das ein T-förmiges Hakenprofil aufweist, in eine Durchgangsöffnung (24) der Runge (23) derart eingeführt wird, bis ein Längssteg des Befestigungsmittels (17) an einem oberen Ende der Durchgangsöffnung (24) anliegt;
- durch ein Kippen der Halteeinrichtung (10) wenigstens ein weiteres Befestigungsmittel (17) der Halteeinrichtung (10) in wenigstens eine weitere Durchgangsöffnung (24) der Runge (23) eingreift und eine Außenfläche einer zweiten Längsseite (16) der Halteeinrichtung (10) an der Seitenwand der Runge (23) direkt anliegt;
- die Halteeinrichtung (10) durch ein Montagewerkzeug, insbesondere durch einen Hammer, nach unten geschoben wird, bis der Längssteg des Befestigungsmittels (17) an einem unteren Ende der Durchgangsöffnung (24) der Runge (23) anliegt, und
- die Halteeinrichtung (10) mit der Runge (23) kraft- und/oder formschlüssig lösbar verbunden wird.

## Claims

1. A holding device (10) for a commercial vehicle, for receiving a load-securing element, in particular a load-securing slat, the holding device (10) having a cuboid main body (11) in which a receiving space (12) is formed, wherein a first transverse side (13) and/or a first longitudinal side (14) of the main body (11) being open to receive the load-securing element, the main body (11) having multiple fasteners (17) on an outer surface of a second longitudinal side (16), in particular a rear wall (26), for mounting on a stanchion (23),
**characterised in that**
at least one fastener (17) is formed by a T-shaped hook (18) having a longitudinal piece and a transverse piece, wherein the transverse piece is connected to the main body (11) by the longitudinal piece and extends along the second longitudinal side (16) of the main body (11), and the transverse piece is formed by a first fastening nose (20) and a second fastening nose (21), wherein the longitudinal piece is arranged between the first fastening nose (20) and the second fastening nose (21).

2. The holding device according to Claim 1,
**characterised in that**
the first fastening nose (20) is larger than the second fastening nose (21).

3. The holding device according to Claim 1 or 2,
**characterised in that**
the T-shaped hook (18) is arranged at one end of the second longitudinal side (16) of the main body (11), and the first fastening nose (20) of the T-shaped hook (18) protrudes beyond the first transverse side (13) of the main body (11).

4. The holding device according to any one of the preceding claims,
**characterised in that**
at least one further fastener (17) is formed by an L-shaped hook (19), which has a longitudinal piece and a transverse piece, wherein the transverse piece is formed by a further fastening nose (22), one end of which terminates flush with a side face of the longitudinal piece.

5. The holding device according to Claim 4,
**characterised in that**
the further fastening nose (22) is formed in the opposite direction to the first transverse side (13) of the main body (11).

6. The holding device according to any one of the preceding claims,
**characterised in that**
the T-shaped hook (18) and the L-shaped hook (19) are arranged at a distance from each other and extend along the second longitudinal side (16) of the main body (11) .

7. The holding device according to any one of the preceding claims,
**characterised in that**
the T-shaped hook (18) and the L-shaped hook (19) are arranged in alignment with each other at at least one side face.

8. The holding device according to any one of the preceding claims,
**characterised in that**
the cuboid main body (11) has at least one through-opening, in particular a slot, on a second transverse side (15), in particular in a bottom (25).

9. The holding device according to any one of the preceding claims,
**characterised in that**
a radius is formed between the first transverse side (13) and the first longitudinal side (14) of the cuboid main body (11).

10. The holding device according to any one of the preceding claims,
**characterised in that**
the holding device (10) is formed by a bent sheet metal part.

11. An arrangement of a stanchion with at least one holding device (10) according to any one of the preceding claims,
**characterised in that**
the stanchion (23) has multiple through-openings (24), in particular multiple slots, in at least one side wall, in which through-openings the fasteners (17) of the holding device (10) engage.

12. The arrangement according to Claim 11,
**characterised in that**
the stanchion (23) has a C-shaped cross-sectional profile.

13. The arrangement according to Claim 11 to 12,
**characterised in that**
the stanchion (23) and the holding device (10) are connected detachably to each other.

14. A commercial vehicle having an arrangement of a stanchion (23) with a holding device (10) according to any one of Claims 11 to 13.

15. A method for producing a holding device (10) according to any one of Claims 1 to 10, in which
- a sheet metal blank is cut out of a main sheet by at least one cutting process, in particular a laser-cutting process;
- at least one fastener (17) is formed by at least one forming step, in particular a bending step, on the sheet metal blank; and
- the sheet metal blank is deformed by at least one further forming step, in particular a further bending step, to form a cuboid main body (11).

16. The method according to Claim 15,
**characterised in that**
the sheet metal blank is cut out of the main sheet such that at least one fastener (17) having a T-shaped hook profile is formed on the sheet metal blank.

17. The method according to Claim 15,
**characterised in that**
the sheet metal blank is cut out of the main sheet such that at least one further fastener (17) having a L-shaped hook profile is formed on the sheet metal blank.

18. A method for mounting a holding device (10) according to any one of Claims 1 to 10 on a stanchion (23), in which
- a holding device (10) is guided towards a stanchion (23) with a first transverse side (13) oriented upwards and at an angle so that the first transverse side (13) is closer to a side wall of the stanchion (23) than a second transverse side (15) of the holding device (10);
- the holding device (10) is introduced by at least one fastener (17) having a T-shaped hook profile into a through-opening (24) in the stanchion (23) until a longitudinal piece of the fastener (17) bears against an upper end of the through-opening (24) ;
- by tilting of the holding device (10), at least one further fastener (17) of the holding device (10) engages in at least one further through-opening (24) in the stanchion (23), and an outer face of a second longitudinal side (16) of the holding device (10) bears directly against the side wall of the stanchion (23);
- the holding device (10) is pushed downwards by a mounting tool, in particular a hammer, until the longitudinal piece of the fastener (17) bears against a lower end of the through-opening (24) in the stanchion (23); and
- the holding device (10) is connected detachably in a frictional and/or interlocking manner to the stanchion (23).

## Revendications

1. Dispositif de retenue (10) pour un véhicule utilitaire, destiné à recevoir un élément de sécurisation du chargement, notamment une latte de sécurisation du chargement, le dispositif de retenue (10) comportant un corps de base (11) de forme parallélépipédique, dans lequel est conçu un espace de logement (12), un premier côté transversal (13) et/ou un premier côté longitudinal (14) du corps de base (11) étant ouvert, pour recevoir l'élément de sécurisation du chargement, le corps de base (11) comportant sur une surface extérieure d'un deuxième côté longitudinal (16), notamment d'une paroi arrière (26) plusieurs moyens de fixation (17) destinés à être montés sur un rancher (23),
**caractérisé en ce qu'**au moins un moyen de fixation (17) est formé d'un crochet (18) en forme de T, pourvu d'une barrette longitudinale et d'une barrette transversale, la barrette transversale étant assemblée par la barrette longitudinale avec le corps de base (11) et s'étendant le long du deuxième côté longitudinal (16) du corps de base (11), et la barrette transversale étant formée d'un premier ergot de fixation (20) et d'un deuxième ergot de fixation (21), la barrette longitudinale étant placée entre le premier ergot de fixation (20) et le deuxième ergot de fixation (21).

2. Dispositif de retenue selon la revendication 1,
**caractérisé en ce que**
le premier ergot de fixation (20) est conçu en étant plus grand que le deuxième ergot de fixation (21).

3. Dispositif de retenue selon la revendication 1 ou 2,
**caractérisé en ce que**
le crochet (18) en forme de T est placé sur une extrémité du deuxième côté longitudinal (16) du corps de base (11) et le premier ergot de fixation (20) du crochet (18) en forme de T saillit par-dessus le premier côté transversal (13) du corps de base (11).

4. Dispositif de retenue selon l'une quelconque des revendications précédentes, **caractérisé en ce qu'**au moins un moyen de fixation (17) supplémentaire est formé par un crochet (19) en forme de L qui comporte une barrette longitudinale et une barrette transversale, la barrette transversale étant formée par un ergot de fixation (22) supplémentaire, qui par une extrémité se termine à fleur d'une surface latérale de la barrette longitudinale.

5. Dispositif de retenue selon la revendication 4,
**caractérisé en ce que**
l'ergot de fixation (22) supplémentaire est conçu dans le sens opposé du premier côté transversal (13) du corps de base (11).

6. Dispositif de retenue selon l'une quelconque des revendications précédentes, **caractérisé en ce que** le crochet (18) en forme de T et le crochet (19) en forme de L sont placés avec un écart mutuel et s'étendent le long du deuxième côté longitudinal (16) du corps de base (11).

7. Dispositif de retenue selon l'une quelconque des revendications précédentes,
**caractérisé en ce que**
par au moins une surface latérale, le crochet (18) en forme de T et le crochet (19) en forme de L sont placés en alignement respectif.

8. Dispositif de retenue selon l'une quelconque des revendications précédentes,
**caractérisé en ce que**
le corps de base (11) de forme parallélépipédique comporte sur un deuxième côté transversal (15), notamment dans un fond inférieur (25) au moins un orifice de passage, notamment un trou oblong.

9. Dispositif de retenue selon l'une quelconque des revendications précédentes,
**caractérisé en ce qu'**entre le premier côté transversal (13) et le premier côté longitudinal (14) du corps de base (11) de forme parallélépipédique est conçu un rayon.

10. Dispositif de retenue selon l'une quelconque des revendications précédentes,
**caractérisé en ce que**
le dispositif de retenue (10) est formé par une pièce de tôle pliée.

11. Agencement d'un rancher pourvu d'au moins un dispositif de retenue (10) selon l'une quelconque des revendications précédentes,
**caractérisé en ce que**
le rancher (23) comporte dans au moins une paroi latérale plusieurs orifices de passage (24), notamment plusieurs trous oblongs, dans lesquels s'engagent les moyens de fixation (17) du dispositif de retenue (10).

12. Agencement selon la revendication 11,
**caractérisé en ce que**
le rancher (23) présente un profil de section transversale en forme de C.

13. Agencement selon la revendication 11 à 12,
**caractérisé en ce que**
le rancher (23) et le dispositif de retenue (10) sont assemblés l'un à l'autre de manière amovible.

14. Véhicule utilitaire doté d'un agencement d'un rancher (23) avec un dispositif de retenue (10) selon l'une quelconque des revendications 11 à 13.

15. Procédé de fabrication d'un dispositif de retenue (10) selon l'une quelconque des revendications 1 à 10, lors duquel,
- à partir d'une tôle de base, par au moins un processus de coupe, notamment un processus de coupe au laser, on coupe une découpe de tôle ;
- par au moins une étape de façonnage, notamment une étape de cintrage, on créé sur la découpe de tôle au moins un moyen de fixation (17), et
- par au moins une étape de façonnage supplémentaire, notamment une étape de cintrage supplémentaire, on déforme la découpe de tôle en un corps de base (11) de forme parallélépipédique.

16. Procédé selon la revendication 15,
**caractérisé en ce qu'**on coupe la découpe de tôle à partir de la tôle de base de telle sorte que sur la découpe de tôle soit créé au moins un moyen de fixation (17) avec un profil de crochet en forme de T.

17. Procédé selon la revendication 15,
**caractérisé en ce qu'**on coupe la découpe de tôle à partir de la tôle de base de telle sorte que sur la découpe de tôle soit créé au moins un moyen de fixation (17) supplémentaire avec un profil de crochet en forme de L.

18. Procédé de montage d'un dispositif de retenue (10) selon l'une quelconque des revendications 1 à 10 sur un rancher (23), lors duquel
- on oriente vers le haut un dispositif de retenue (10) par un premier côté transversal (13) et on le guide sous un angle sur un rancher (23), de telle sorte que le premier côté transversal (13) soit plus proche d'une paroi latérale du rancher (23) qu'un deuxième côté transversal (15) du dispositif de retenue (10) ;
- on introduit le dispositif de retenue (10) par au moins un moyen de fixation (17), qui comporte un profil en crochet en forme de T dans un orifice de passage (24) du rancher (23) jusqu'à ce qu'une barrette longitudinale du moyen de fixation (17) s'appuie sur une extrémité supérieure de l'orifice de passage (24) ;
- par un basculement du dispositif de retenue (10), au moins un moyen de fixation (17) supplémentaire du dispositif de retenue (10) s'engage dans au moins un orifice de passage (24) supplémentaire du rancher (23) et une surface extérieure d'un deuxième côté longitudinal (16) du dispositif de retenue (10) est directement adjacent à la paroi latérale du rancher (23) ;
- à l'aide d'un outil de montage, notamment d'un marteau, on pousse le dispositif de retenue (10) vers le bas jusqu'à ce que la barrette longitudinale du moyen de fixation (17) soit adjacente à une extrémité inférieure de l'orifice de passage (24) du rancher (23), et
- on assemble de manière amovible, par complémentarité de force et/ou de forme le dispositif de retenue (10) avec le rancher (23).
